# EUROPEAN PATENT APPLICATION

(11) **EP 4 636 906 A1**
(43) Date of publication of application: **22.10.2025**
(21) Application number: 24170927.8
(22) Date of filing: 18.04.2024
(51) Int. Cl.: H01M 10/613, H01M 10/647, H01M 10/6554, H01M 10/6556, H01M 50/209, H01M 50/224, H01M 50/231, H01M 50/211

(54) **BATTERY MODULE AND METHOD OF MANUFACTURING THE SAME**

(71) Applicant: Samsung SDI Co., Ltd., Yongin-si, Gyeonggi-do 17084 (KR)
(72) Inventor: Bloder, Martin, 8261 Sinabelkirchen (AT)
(74) Representative: Gulde & Partner

(57) **Abstract**

The present disclosure refers to a battery module (100) and a method of manufacturing the battery module (100). The battery module (100) includes a plurality of battery cells (10). The frame (20) includes a bottom member (22) and a plurality of side walls (24, 25, 26, 27), wherein the bottom member (22) and the plurality of side walls (24, 25, 26, 27) form an interior accommodation space (28) in which the plurality of battery cells (10) is accommodated. The at least two side walls (24, 26) opposite from each other among the plurality of side walls (24, 25, 26, 27) are bent and extended from the bottom member (22). The at least two side walls (24, 26) and the bottom member (22) are formed by a plate (30) comprising at least one of a first metal sheet (32) and at least one of a second metal sheet (34) roll-bonded to each other. The plate (30) further includes at least one cooling channel (40) formed by inflation between bonding areas (33) where the first metal sheet (32) and the second metal sheet (34) are roll-bonded with each other.

## Description

### Field of the Disclosure

The present disclosure relates to a battery module and a method of manufacturing the battery module. In addition, the present disclosure relates to a battery system or battery pack including the battery module and a vehicle including the battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The mechanical integration of a battery pack requires appropriate mechanical connections between the individual components, e.g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction.

Battery systems according to the prior art, despite any modular structure, usually include a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e.g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e.g. in the mechanic's workshop, of the bulky battery systems becomes difficult.

An active or passive thermal management system may be included to provide thermal control of the battery pack, to safely use the at least one battery module by efficiently emitting, discharging, and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting/discharging/dissipating heat from the cells is required.

Current battery modules accommodating a plurality of battery cells either consist of solid structures which need additional cooling plates or the battery modules are formed by extruded profiles both for the supporting frame as well as for the coolant channels.

Battery modules which incorporate additional cooling plates into the battery module require an increased number of parts to be assembled together. This implies that the assembly effort is enhanced such that the manufacturing of the battery modules requires more manufacturing steps.

Battery modules which are produced through extruded profiles to build the frame and to incorporate the cooling channels therein requires complicated frame assembly operations. In addition, extruded profiles have inflexible design limitations with limited cooling performance to carry away excessive heat.

In both cases manufacturing effort is relatively high due to the number of assembly steps and parts so that a reduction of the number of manufacturing steps is desirable with respect to the mentioned battery modules. This also reduces manufacturing costs. In addition, more flexible cooling channel designs may be desired to improve the cooling performance of battery modules. Further, while simplifying the manufacturing process a substantial mechanical strength should be provided to enhance structural integrity when in use which may further allow an avoidance of additional framing.

### Summary of Invention

The invention is defined by the appended claims.

The description that follows is subjected to this limitation. Any disclosure lying outside the scope of said claims is only intended for illustrative as well as comparative purposes.

According to one aspect of the present disclosure, a battery module is provided. The battery module includes a plurality of battery cells. A frame is provided which includes a bottom member and a plurality of side walls, wherein the bottom member and the plurality of side walls form an interior accommodation space in which the plurality of battery cells is accommodated. At least two side walls opposite from each other among the plurality of side walls are bent and extended from the bottom member. The at least two side walls and the bottom member are formed by a plate comprising a first metal sheet on an inner side of the plate and a second metal sheet on an outer side of the plate roll-bonded to each other. The plate further includes at least one cooling channel formed by inflation between bonding areas where the first metal sheet and the second metal sheet are roll-bonded.

According to another aspect of the present disclosure, a method of manufacturing a battery module is provided. The method includes the step of providing a plate by roll-bonding of a first metal sheet and a second metal sheet. The method includes the step of bending the plate so that at least two side walls opposite from each other are bent and extended from a bottom member of the plate. The method further includes the step of inflating of the plate such that at least one cooling channel is formed between bonding areas where the first metal sheet and the second metal sheet are roll-bonded. The method includes the step of providing a plurality of battery cells in an accommodation space formed at least by the bottom member and the at least two opposite side walls.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic perspective view of a battery module with battery cells therein according to an embodiment,
- Fig. 2: illustrates a schematic side view of the battery module according to an embodiment,
- Fig. 3: illustrates a schematic perspective view of the battery module without battery cells therein according to an embodiment,
- Fig. 4: illustrates a schematic top view of a battery module without battery cells according to an embodiment,
- Fig. 5: illustrates a perspective view of a battery module without battery cells according to another embodiment,
- Fig. 6: illustrates a schematic top view of the battery module without battery cells according to the another embodiment, and
- Fig. 7: schematically illustrates a method of manufacturing according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery module is provided. The battery module includes a plurality of battery cells. A frame is provided which includes a bottom member or bottom portion and a plurality of side walls. The bottom member and the plurality of side walls form an internal accommodation space in which the plurality of battery cells is accommodated and/or supported. At least two side walls opposite from each other among the plurality of side walls are bent and extended from the bottom member or bottom portion. The at least two side walls and the bottom member are formed by a plate comprising a first metal sheet on an inner side of the plate and a second metal sheet on an outer side of the plate, wherein the first metal sheet and the second metal sheet are roll-bonded to each other. The plate further includes at least one cooling channel formed by inflation between bonding areas where the first metal sheet and the second metal sheet are roll-bonded or, in other words, form roll-bonded connections.

The at least two side walls being bent and extended from the bottom member may form a U-shape. That is, the bottom portion may include bend corners from which the at least two side walls extend. The battery cells may form a stack of battery cells. The at least two side walls may extend in perpendicular direction from said bottom portion. The roll bonding refers to particular form of connecting metal sheets with each other. In practice, two metal sheets may be passed through a pair of flat rollers exposed to sufficient pressure to bond the layers. The pressure is set high enough to deform the metals and reduce the combined thickness. Heating in form of preheating may be added depending on the selected bonding conditions. The mating surfaces may be prepared before the bonding process. The formation of the cooling channels by inflating may be provided by coating (with release agent or separation agent) a cooling channel layout on one among the metal sheets according to the desired cooling cannels to be formed. Then, only the bare or uncoated metal surfaces bond in the roll bonding process. These areas refer to the bonding areas. Then, the un-bonded parts corresponding to the cooling channel layout are inflated. An inflation may be generated through heating the metal sheets or at least one of the metal sheets, or by applying fluid pressure at the inlet and outlet ports. For the inflating, for example, a pressure generating device like a pump, a compressor or other sources that can cause high fluid pressure may be connected to an end, e.g. a port, of the to-be inflated cooling channel, i.e. the unbonded areas, so that a fluid pressure, for example for air or coolant, causes inflation to form the at least one cooling channel. A limitation of the inflation can be achieved by the battery cells in a state where the battery cells are installed so that the inflation of the respective channel adapts and thus compensates the tolerances of the battery cells. In alternative or in addition, to reach a determined shape for the at least one cooling channel, a contour defining member may be provided which limits extension for the inflation and provides a defined shape. In order to connect the to-be-inflated cooling channel to the pressurized medium, a welded, soldered or otherwise very well-connected connection to the respective channel may be an advantage. For to improve the connections, a hose sleeve or a pipe may be directly welded to the channel that is to be inflated. The un-bonded areas may be formed between the bonded areas. The inflation operation to generate the cooling channels may be performed after or before the bending process. The metals of the first metal sheet and the second metal sheet may be the same material in one embodiment. The roll-bonding allows to integrate the cooling channels. The cooling channels may be connected to cooling ports and coolant media may flow through the cooling channel. On the inner side may mean the side directed to the accommodation space or to the battery cells. On the outer side may mean the side directed away from the accommodation space or the battery cells.

The battery module has the advantage that it can be easily manufactured while including the cooling channels directly inside the frame corpus without an additional assembly step. Thus, compared to the processes of extruded profiles and methods with separate cooling channels significant manufacturing costs can be reduced. Thus, through folding of the roll bonded sheet metal prior or after the inflation, a frame is produced that already resembles most commonly used cell module frames. Thus, by merely providing the bending of the roll bonded sheet metal, at least a u-shaped frame is provided to mechanically support and accommodate the battery cells. In addition, desired channel structures can be generated with high cooling performance in the frame. Further, due to the integration of the cooling channels directly in the frame, excessive heat generated by the battery cells may be efficiently carried away to prevent an overheated state in the battery module or at a battery cell in the battery module.

According to an embodiment, the first metal sheet formed on the inner side includes at least one elongate protrusion to form the at least one cooling channel. The second metal sheet formed on the outer side of the plate is flat. In this embodiment, the cooling channels are close to the interior where the battery cells are disposed so that a good heat transfer is provided. On the other hand, the outer surface remains entirely flat and thus can be stably supported in a carrier framework or any other support surface.

According to an embodiment, the at least one elongate protrusion, or the corresponding coolant channel, includes a flat top surface and curved side surfaces. Thus, due to the flat top surface despite of the cooling channels being formed on the inner side, the battery cells can be directly positioned on the plate. In particular, the flat top surfaces together may act as a support area for another functional layer or for the battery cells, i.e., the battery cell stack. The flat top surface may be achieved by using a flat inflation barrier plate in the inflation process to prevent inflation beyond the flat inflation barrier plate so to provide a flat top surface with equal height. The flat inflation barrier plate can be removed after the inflation process.

According to an embodiment, the bonding areas are formed at least on the bottom member and in bent edges of the plate where the at least two side walls are bent. Thus, despite of the formation of the several coolant channels, the bonding strength in the plate is enhanced to withstand delamination forces that may act in the bent edges due to the bending. Thus, the roll-bonded plate or frame is strengthened by providing roll-bonding connections directly in the bent edges or corner areas.

According to an embodiment, the at least one cooling channel is formed in the bottom member. Thus, an effective cooling of the battery cells can be provided and excessive heat can be transported away through use of a coolant transported in the cooling channel. In an example, the coolant channels may include a plurality of parallel extending straight portions connected to each other by curved end portions. The curved end portions may be formed at ends of the bottom portion. The curved portions may provide a reverse turn. That is, the turns may be 180°- turns. The cooling channels may form meanders to cover the support area of the battery cells and to increase the cooling performance.

According to an embodiment, the at least one cooling channel is formed in at least one of the two opposite side walls. In embodiments, the at least one cooling channel may be formed in at least one of the two opposite side walls and the bottom member. Thus, since the cooling channel can be easily formed by the roll bonding in the side walls, the cooling effect can be enhanced in this manner since excessive heat formed at the top or side of the battery cells can be carried away. Similar to the bottom member, the coolant channels in the side walls may include a plurality of parallel extending straight portions connected to each other by curved coolant portions. The curved portions may be formed at ends of the side walls. The curved portions may provide a full reverse turn. That is, the turns may be 180° turns. The cooling channels may form meanders.

According to an embodiment, at least one coolant channel formed in the two opposite sidewalls is connected by a connection channel member with the at least one cooling channel in the bottom member. Thus, a single cooling channel path through side walls and bottom portion may be provided in the frame. Therefore, cooling performance for the plurality of battery cells accommodated therein can be enhanced while not increasing the number of additionally required cooling ports.

According to an embodiment, the plurality of side walls includes two end plates opposite to each other and fixed to the bottom member and/or the two opposite side walls. For example, fixing may be achieved by welding, i.e., providing a weld connection, or by riveting or bolting. Thus, conventional end plates can be combined with the roll bonded plate to complete the frame beside the side walls and the bottom portion formed by the roll bonded metal sheets.

According to an embodiment, the end plates are fixed by a snap-fit connection. A snap-fit connection easily allows to exert a pressure force on the battery cells or battery cell stack. This may also efficiently prevent swelling of the plurality of battery cells in the battery module.

According to an embodiment, at least one of the two end plates are axially displaced with respect to an end of the bottom member. In other words, the at least one end plate may be indented with respect to the end of the bottom member. The connection channel member may be formed between the at least one indented end plates and the end of the bottom member. Thus, a continuous coolant channel path can be provided by making use of the fact that the end plates are separate from the plate and thus can be axially displaced.

According to an embodiment, the plurality of side walls includes two end plates opposite to each other, wherein the end plates are bent and extended from the bottom member. Thus, the end plates are also integrated into the frame which reduces the number of assembly steps. The end plates thus form side walls together with the other side walls. Thus, an integral frame including all side walls and bottom portion is provided. This reduces further additional fixation effort and thus further reduces the manufacturing effort and the need for additional fixation means.

According to an embodiment, the plurality of side walls includes two end plates opposite to each other, wherein the end plates are formed by deep drawing from the bottom member. Therefore, the end plates are also integrated into the frame. Thus, an integral frame including all side walls and bottom portion is provided. This reduces further additional fixation and thus further reduces the manufacturing effort and the need for additional fixation means.

According to an embodiment, the connection member is formed inside the frame at a corner of the bottom member. Therefore, the frame is not impacted by the addition of the connection member. Further, loss of support space is reduced by using the corners for the connection. Thus, a continuous cooling path through the frame can be provided.

According to an embodiment, the first metal sheet has a first thickness less than a second thickness of the second metal sheet. For example but not restricted thereto, the first thickness may be between 0.5 - 2 mm. For example but not restricted thereto, the second thickness may be between 3 - 5 mm. Thus, the second metal sheet may provide structural integrity to the frame by thickness while the first thinner metal sheet may be suitable for the cooling channel generation by inflation due to the reduced thickness. Thus, it may be possible to incorporate structural mechanical requirements together with providing cooling performance.

According to an embodiment, the first metal sheet and the second metal sheet include different metals and/or different metal alloys. Thus, the inner side of the frame and the outer side of the frame can be separately designed according to a required functionality needed. For example, the inner side may need to have higher heat conductivity as it is closer to the heat generating battery cells while the outer side of the frame may require more structural robustness to prevent deformation. Thus, the roll bonding can be used to tailor the frame for the specific technical needs. For example, resistance against crash/abuse load cases, swelling forces or vibration resistance is increased. In addition, general stiffness is increased.

According to an embodiment, the first metal sheet includes aluminum or an aluminum alloy and the second metal sheet includes a steel or a metal matrix composite. Thus, resistance against crash/abuse load cases, swelling forces or vibration resistance is increased. In addition, general stiffness is increased due to the steel or the metal matrix composite. Steel can be produced on large scale and is thus better for large scale production of battery modules. The metal matrix composite may include fibers or particles dispersed in the metallic matrix. Thus, the plate can be reinforced to increase the structural integrity and swelling absorbance.

According to an embodiment, the first metal sheet has a thermal conductivity higher than the thermal conductivity of the second metal sheet. Thus, the inner first metal sheet may act as heat conductor that rapidly transports heat away while proving as well the cooling channels. Thus, cooling performance can be furthermore increased.

According to an embodiment, additive particles are used in the roll-bonding. Thus, bonding may be strengthened to reinforce the frame while reducing the risk of delamination. For example, metallic particles or ceramic particles may be added during the roll bonding.

According to another embodiment, a method of manufacturing a battery module, wherein the method includes the steps of: a) providing a plate by roll-bonding a first metal sheet with a second metal sheet and b) bending the plate so that at least two side walls opposite from each other are bent and extended from a bottom member. The method further includes the step of inflating c) of the plate such that at least one cooling channel is formed between the first metal sheet and the second metal sheet. The method further includes d) providing or inserting a plurality of battery cells in an accommodation space formed at least by the bottom member and the at least two side walls.

The method has the advantage that the battery module can be easily manufactured while including the cooling channels directly in the frame itself. Thus, compared to the processes of extruded profiles and methods with separate cooling channels significant manufacturing costs can be reduced. In particular, through folding of the roll bonded sheet metal prior or after their inflation, a frame can be made that already resembles most commonly used cell module frames. Thus, only by the bending of the roll bonded sheet metal, u-shaped frame is readily provided. In addition, due to the integration of the cooling channels directly in the frame, heat can be efficiently carried away.

The additional features as mentioned in the context of describing embodiments with respect to the battery module can be combined with the above-described method resulting in the same advantageous effects as described above.

According to another aspect of the disclosure, a battery system or a battery pack comprising the battery module according to the above embodiments is described.

According to another aspect of the disclosure a vehicle comprising the battery module or the battery system according to the above embodiments is described.

### Specific Embodiments

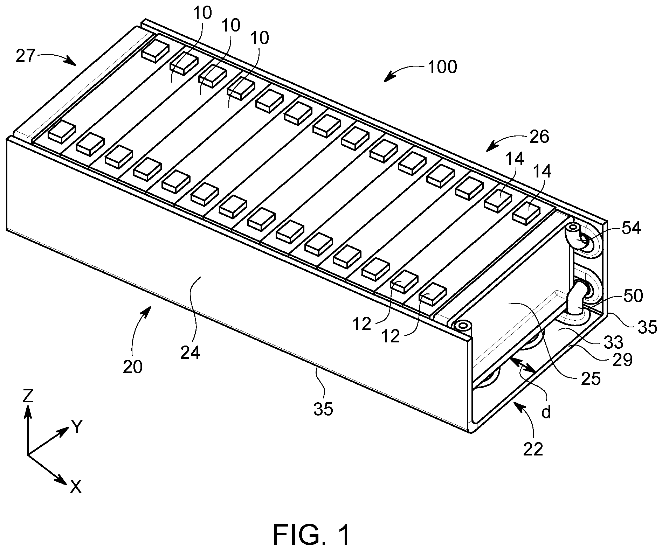

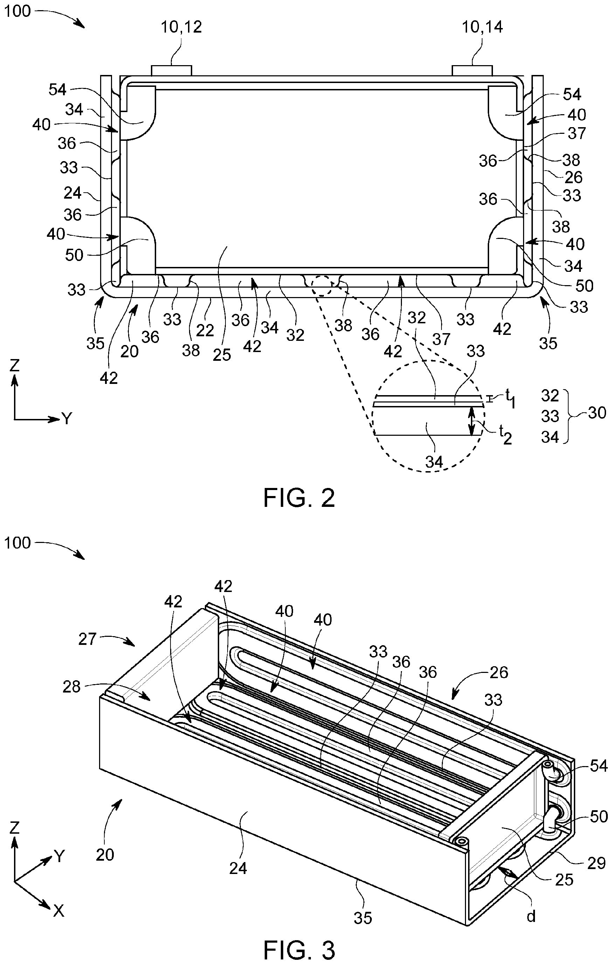

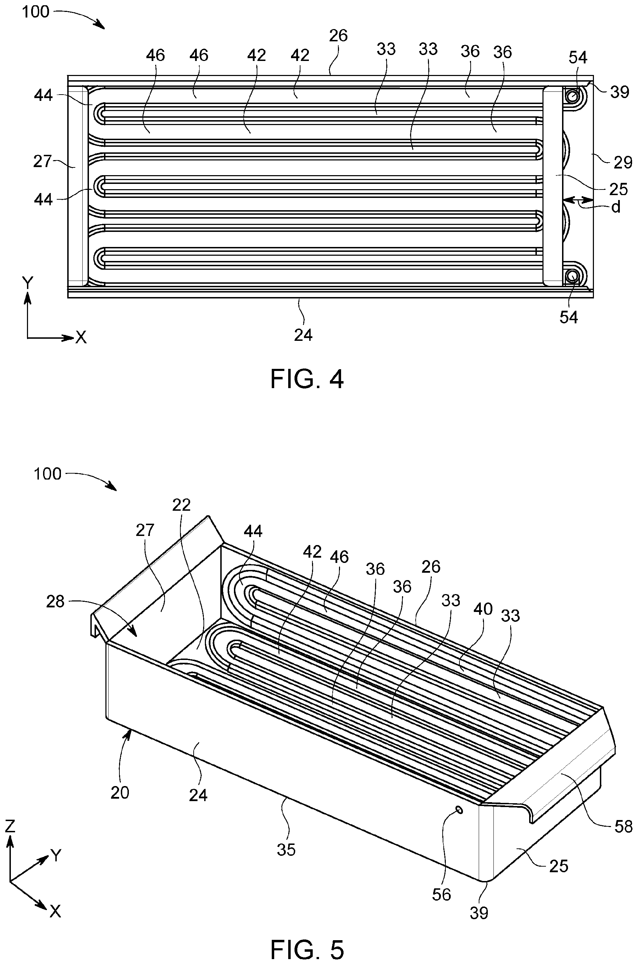

Figures 1 to 4 show a battery module 100 according to various embodiments of the invention according to different perspectives. Fig. 1 shows a schematic perspective view of a battery module 100 including a plurality of battery cells 10. Fig. 2 shows a side view of the battery module 100 in x-direction (in particular in (-x)-direction). In particular, Fig. 2 shows the battery module 100 in a side view when viewed onto end plates, i.e., in this case in Fig. 3 shows a schematic perspective view of a battery module 100 according to an embodiment without battery cells 10. Fig. 4 illustrates a schematic top view of a battery module 100 according to an embodiment without battery cells 10. In the following, the battery module 100 will be described with reference to the various Figures 1 to 4.

Referring to Figs. 1 and 2, the battery module 100 includes a plurality of battery cells 10. The battery cells 10 may each include a first terminal 12 and a second terminal 14 with opposite polarity. Further, the battery cells 10 may be interconnected (not shown) according to voltage requirements. The plurality of battery cells 10 form a battery cell stack. The battery cells 10 may be prismatic battery cells 10 as shown in Fig. 1. However, also different formats of battery cells 10 may be stacked together or positioned with respect to each other in other suitable manner.

The battery module 100 further includes a frame 20. The frame 20 is surrounding and supporting the plurality of battery cells 10 of the battery module 100. The frame 20 includes a bottom member 22 and a plurality of side walls 24, 25, 26, 27 as indicated in the respective Figs. 1 to 4. The bottom member 22 and the plurality of side walls 24, 25, 26, 27 form an interior accommodation space 28 in which the plurality of battery cells 10 is accommodated or inserted. The accommodation space 28 is shown in Fig. 3 where the battery cells 10 are not included for mere illustration purposes.

Two side walls 24, 26 opposite from each other among the plurality of side walls 24, 25, 26, 27 are bent and extended from the bottom member 22. The respective side walls 24, 26 may extend in perpendicular direction, here a z-direction, from the bottom member 22. Thus, bent edges 35 are generated due to the bending as indicated in Fig. 1. The at least two side walls 24, 26 together with the bottom member 22 form a u-shaped or flat u-shaped cross section when viewed in x-direction as illustrated in Figs. 1 and 2.

The two side walls 24, 26 and the bottom member 22 are formed by a plate 30. The plate 30 is detail illustrated in Fig. 2, and in the enlarged inset of Fig. 2. The plate 30 includes a first metal sheet 32 on an inner side of the plate 30 and a second metal sheet 34 on an outer side of the plate 30. The inner side and the outer side are defined with respect the accommodation space 28 or, equivalently, with respect to the plurality of battery cells 10 accommodated therein.

The first metal sheet 32 and the second metal sheet 34 are roll-bonded to each other. This is illustrated in the enlarged inset in Fig. 2. The first metal sheet 32 and the second metal sheet 32 thus include bonding areas 33 where the first metal sheet 32 and the second metal sheet 34 are roll-bonded to each other.

The plate 30 further includes at least one cooling channel 40, 42. The cooling channels 40, 42 are formed by inflation, e.g. by applying high pressure to the unbonded regions, between the bonding areas 33 where the first metal sheet 32 and the second metal sheet 34 are roll bonded. In the roll-bonding, a separation agent or coating can be used in the roll-bonding to prevent a bonding at the locations where the cooling channels 40, 42 are to be formed. The controlled coating produces a cooling channel layout that is then inflated to generate the cooling channels 40, 42. Thus, the cooling channels 40, 42 are fully integrated within the entire corpus of the frame 20 without the requirement of an additional assembly step or additional fixation means which eases the manufacturing and desired channel structures can be generated with high cooling performance.

The cooling channels 40, 42 may be connected to each other to form a continuous channel provided within the frame 20. For example, a plurality of curved channel end portions 44 may connect a plurality of straight cooling channel portions 46 to form the continuously connected cooling channels 40, 42. An example is shown in Figs. 3 and 4 or in the side view according to Fig. 1. This can reduce an amount of cooling ports required.

As shown in the side view of Fig. 2, the first metal sheet 32 is profiled on the inner side. The first metal sheet 32 includes at least one elongate protrusion 36 on the inner side. The elongate protrusion 36 are generated by the inflation to form the at least one cooling channel 40, 42. Further, the second metal sheet 34 may be flat as indicated in Fig. 2. Thus, an outer side of the frame 20 remains unstructured. Therefore, the battery module 100 can be easily supported by a carrier framework while providing efficient cooling to the battery cells 10 through the cooling channels 40, 42 formed to protrude in the inner direction. In an alternative embodiment, the cooling channels 40, 42 and/or the protrusions 36 may be formed on the outer side of the frame 20.

The at least one elongate protrusions 36, as illustrated in Fig. 2, include a flat top surface 37 and curved side surfaces 38. That is, flat top surfaces 37 are provided despite of the profiled inner side due to the protrusions 36. Thus, despite of having the profiled inner side, the battery cells 10 can be directly supported by the flat top surfaces 37 of the profiled inner side. This can reduce a heating distance.

Referring to Fig. 1, the bonding areas 33 are formed at least on the bottom member 22 to form bonding areas 33 between the first metal sheet 32 and the second metal sheet 34. Between these bonding areas 33, the cooling channels 40, 42 are formed. Thus, the at least one cooling channels 40, 42 are formed in unbonded areas. Since the plate 30 is bent, they form at least a u-shape profile in this embodiment. Due to the bending and due to the at least one cooling channel 40, 42 forces like delamination may act on the first metal sheet 32 and the second metal sheet 34 in the bent edge 35. Therefore, bonding areas 33 are provided in the bent edge 35 where the at least two side walls 24, 26 are bent. This is illustrated in Fig. 1. Thus, due to the use of the bonding areas 33 delamination in the bent edges 35 due to delamination forces may be prevented and the bent edge 35 mechanically stabilized.

In addition, the at least one cooling channel 40, 42 is formed in the bottom member 22 and in at least one of the two opposite side walls 24, 26. This is demonstrated in Fig. 3 as well as in the side view of Fig. 1. This can be easily produced by the roll bonding by inflating the plate 30 before or after bending and allows for better cooling performance to also carry heat away from upper parts of the battery cells 10.

The first metal sheet 32 may have a first thickness t1 less than a second thickness t2 of the second metal sheet 34. For example, the first thickness t1 may be between 0.5 - 1.5 mm. For another example, the second thickness t2 may be between 2 - 4 mm. Thus, the second metal sheet 34 may provide structural integrity to the frame 20 while the first metal sheet 32 remains thin to be easily inflatable to produce the cooling channels 40, 42. Thus, by increasing the second thickness t2 of the second metal sheet 34 relative to the first thickness t1 of the first metal sheet 32 it is possible to incorporate structural mechanical requirements of the frame 20. Thus, the second metal sheet 34 can be used to provide mechanical strength while the first metal sheet 32 remains relatively thin to provide the cooling channels 40, 42 by inflation. Therefore, mechanical strength to withstand crash/abuse load cases, swelling forces and of course general stiffness and vibration resistance for vehicle operation can be enhanced. Therefore, any additional framing of the battery cells 10 may not be needed

In addition, the first metal sheet 32 and the second metal sheet 34 may include different metals and/or different metal alloys. This allows to make use of the roll-bonding procedure to specifically designate mechanical or heat conduction properties to the inner or outer metal sheet. For example, the first metal sheet 32 may include an aluminum or an aluminum alloy while the second metal sheet 34 may include a steel or a metal matrix composite. Thus, the relatively good heat conduction of aluminum or an aluminum alloy is used for the inner first metal sheet 32. The mechanical robust steel is provided as second metal sheet 34 to enhance the mechanical strength of the entire plate 30 and the entire frame 20. In another embodiments, the second metal sheet 34 may be metal matrix composite to structurally reinforce the second metal sheet 34 and the frame 20.

The different metal materials can also be selected according to heat conduction criteria. For example, the first metal sheet 32 may have a thermal conductivity higher than the thermal conductivity of the second metal sheet 34. Since excessive heat should be rapidly carried away from the battery cells 10, the first metal sheet 32 having a higher thermal conductivity than the thermal conductivity of the second metal sheet 34 may facilitate releasing of heat away from the battery cells 10. Additional embodiments are directed to enhance the coupling strength of the roll-bonding connection between the first metal sheet 32 and the second metal sheet 34, for example, by additive particles used in the step of roll-bonding.

Thus, the battery modules 100 can be tailored by the above features to provide good heat conduction, mechanical stability and structural reinforcement to withstand crash/abuse load cases, swelling forces and of course general stiffness and vibration resistance for vehicle operation making use of the roll bonding connection.

As for example shown in Figs. 1 to 3, the at least one cooling channel 40 in the two opposite side walls 24, 26 is connected by a connection channel member 50 with at least one cooling channel 42 in the bottom member 22. The connection channel member 50 in this embodiment may have the form of a knee or a bended portion that connects cooling channels between the respective side wall 24, 26 and the bottom member 22 as shown for example in Figs. 1 and 2.

The plurality of side walls 24, 25, 26, 27 in this embodiment of Figs. 1 to 4 include two end plates 25, 27 opposite to each other. The end plates 25, 27 are fixed to the bottom member 22 and/or the two opposite side walls 24, 26. For example, the fixing may be performed by fixation techniques like welding, snap-fitting, bolting or riveting.

In this embodiment, one of the two end plates, here end plate 25, are positioned axially displaced inwards with respect to an end 29 of the bottom member 22. That means, as shown in Fig. 1, the end 29 of the bottom member 22 is distanced from the inwardly displaced end plate 25 by a displacement distance d as shown in Fig. 1. The end plate 25 may be directly disposed on the flat top surfaces 37 of the at least one cooling channels 40, 42.

Further, the connection channel member 50 is formed between the inwardly displaced end plate 25 and the end 29 of the bottom member 22. Thus, the cooling channels 40, 42 of different sides can be continuously connected within the frame 20 by making use of that the end plate 25 is separate from the plate 30 so that it can be axially displaced inwards.

Further, cooling ports 54 can be provided in the battery module 100 to allow the supply or the draining of coolant to and from the connected cooling channels 40, 42. For example, the cooling ports 54 may be overlapping or positioned above the connection channel member 50 in a corner 39 of the bottom member 22.

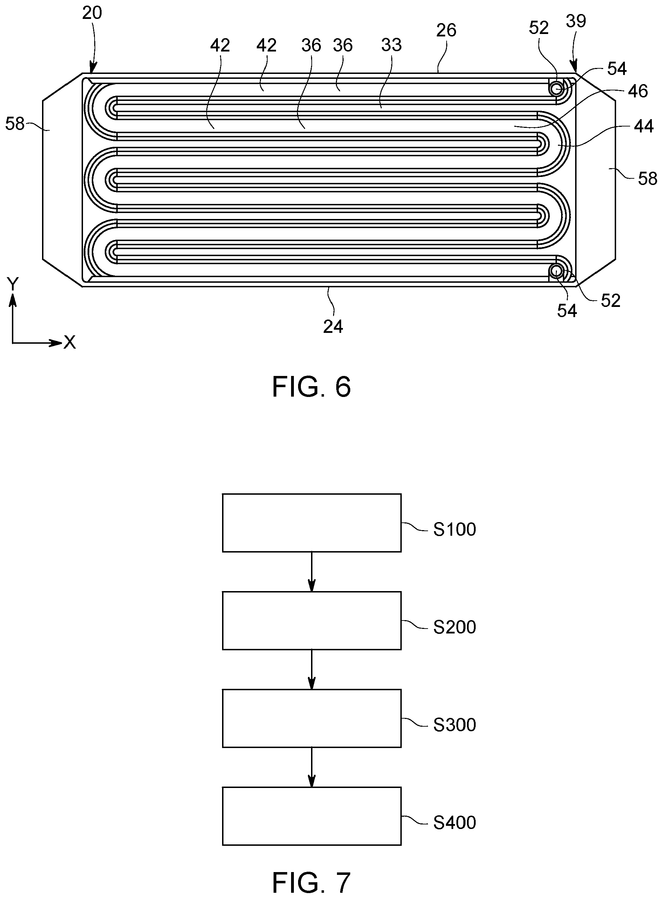

Fig. 5 and Fig. 6 show a battery module 100 according to another embodiment of the present invention. Fig. 5 illustrates a perspective view of the battery module 100 according to another embodiment without battery cells. Fig. 6 illustrates a schematic top view of the battery module 100 according to an embodiment. In the present case, only the differences with respect to the embodiments according to the Figs. 1 - 4 are described for conciseness. The variously described features above apply else to this embodiment as well and are incorporated herein by reference.

The plurality of side walls 24, 25, 26, 27 include two end plates 25, 27 opposite to each other. In this embodiment, the end plates 25, 27 are bent and extended from the bottom member 22 or are formed by deep drawing. Thus, an additional fixation and manufacturing step can be avoided since an integral frame 20 is generated. This reduces the amount of assembly steps and assembly parts since additional fixation is not required.

Further, as indicated in an example in Fig. 6, a connection channel member 52 is formed inside the frame 20 at a corner 39 of the bottom member 22. In this embodiment, the size of the accommodation space 28 may be remain comparably large since only a small amount support space is lost. The remaining features that are described with respect to Figs. 1 to 4 are included herein by reference.

In addition, In this embodiment, an interconnection cooling port 56 is provided on at least one among the side walls 24, 26. This interconnection cooling port 56 may be provided as well in the embodiments of Fig. 1. This interconnection cooling port 56 may allow to interconnect the cooling channels 40, 42 of different battery modules 100. In addition, flaps 58 may be provided at the upper portion of the end plates 25, 27.

According to Fig. 7 a schematic method of manufacturing a battery module 100 is provided. The method includes the steps of providing S100 a plate 30 by roll-bonding a first metal sheet 32 with a second metal sheet 34. In an example, two metal sheets are passed through a pair of flat rollers exposed to sufficient pressure to bond the sheets. The pressure is high enough to deform the metals and reduce the combined thickness. Heating in the form of preheating may be added depending on the selected bonding conditions.

The steps of the method further include bending S200 the plate 30 so that at least two side walls 24, 26 opposite from each other are bent and extended from a bottom member 22 of the plate 30. Thus, a u-shaped profile may be provided by the bending.

The method may further include the step of inflating S300 of the plate 30 such that at least one cooling channel 40, 42 is formed between bonding areas 33 where the first metal sheet 32 and the second metal sheet 34 are roll-bonded. In an example, the formation of the cooling channels 40, 42 by inflating may be provided by coating (with release agent or separation agent) a cooling channel layout on one among the metal sheets according to the desired cooling cannel design. Then, only the uncoated metal surfaces bond in the roll bonding process. These areas refer to the bonding areas 33. The inflation may be generated by applying pressure to the unbonded areas. For the inflating, for example, a pressure generating device like a pump, a compressor or other sources that can cause high fluid pressure may be connected to an end, e.g. a port, of the to-be inflated cooling channel, i.e. the unbonded areas, so that a fluid pressure causes inflation to form the at least one cooling channel 40, 42. A limitation of the inflation can be achieved by the battery cells in a state where the battery cells 10 are installed so that the inflation of the respective channel adapts and thus compensates the tolerances of the battery cells 10. In alternative or in addition, to reach a determined shape for the at least one cooling channel, a contour defining member may be provided which limits extension for the inflation and provides a defined shape. In order to connect the to-be-inflated cooling channel to the pressurized medium, a welded, soldered or otherwise very well-connected connection to the respective channel may be an advantage. For to improve the connections, a hose sleeve or a pipe may be directly welded to the channel that is to be inflated. Thus, the roll-bonding easily allows to integrate the cooling channels in a frame. The step of inflating S300 may be performed before or after the step of bending S200 the plate 30.

In addition, the present disclosure includes the step of providing S400 a plurality of battery cells 10 in an accommodation space 28 formed at least by the bottom member 22 and the at least two side walls 24, 26. Further, a top cover may be provided to close the battery module 100 in an embodiment or may remain open in other embodiments.

In summary, a battery module 100 and a manufacturing method is provided that allows easy and fast manufacturing while including cooling channels 40, 42 directly in the frame 20 itself. Thus, only by bending of the roll bonded plate 30, at least a u-shaped frame 20 is directly obtained without additional fixation means. In addition, due to the integration of the cooling channels directly in the frame, heat can be efficiently carried away. Several measures can be incorporated that enhance structural integrity, heat conduction and structural reinforcement and/or colling channel interconnectivity as described above making use of the roll bonding connection.

### Reference signs

- 100: battery module

- 10: battery cell
- 12: first terminal
- 14: second terminal

- 20: frame
- 22: bottom member
- 24, 26: side wall
- 25, 27: end plate (side wall)
- 28: accommodation space
- 29: end

- 30: plate
- 32: first metal sheet
- 33: bonding area
- 34: second metal sheet
- 35: bent edge
- 36: protrusion
- 37: top surface
- 38: curved side surface
- 39: corner

- 40: cooling channel
- 42: cooling channel
- 44: curved cooling channel end portion
- 46: straight cooling channel portion

- 50: connection channel member
- 52: connection channel member
- 54: cooling port
- 56: interconnection cooling port
- 58: flap
- S100: providing the plate
- S200: bending the plate
- S300: inflating the plate
- S400: providing battery cells

- d: indentation distance
- t1: first thickness
- t2: second thickness

## Claims

1. A battery module (100), comprising:
a plurality of battery cells (10), and
a frame (20) comprising a bottom member (22) and a plurality of side walls (24, 25, 26, 27), wherein the bottom member (22) and the plurality of side walls (24, 25, 26, 27) form an interior accommodation space (28) in which the plurality of battery cells (10) is accommodated,
wherein at least two side walls (24, 26) opposite from each other among the plurality of side walls (24, 25, 26, 27) are bent and extended from the bottom member (22),
wherein the at least two side walls (24, 26) and the bottom member (22) are formed by a plate (30) comprising a first metal sheet (32) on an inner side of the plate (30) and a second metal sheet (34) on an outer side of the plate (30) roll-bonded to each other, and
wherein the plate (30) further comprises at least one cooling channel (40) formed between bonding areas (33) of the first metal sheet (32) and the second metal sheet (34).

2. The battery module (100) according to claim 1, wherein:
the first metal sheet (32) comprises at least one elongate protrusion (36) obtained by inflation to form the at least one cooling channel (40), and
the second metal sheet (34) is flat.

3. The battery module (100) according to claim 1, wherein the at least one elongate protrusion (36) comprises a flat top surface (37) and a curved side surface (38).

4. The battery module (100) according to any of the preceding claims 1 to 3, wherein bonding areas (33) are formed at least on the bottom member (22) and in bent edges (35) where the at least two side walls (24, 26) are bent.

5. The battery module (100) according to any of the preceding claims 1 to 4, wherein the at least one cooling channel (42) is formed in the bottom member (22) and/or in at least one of the two opposite side walls (24, 26).

6. The battery module (100) according to claim 5, wherein at least one cooling channel (40) in the two opposite side walls (24, 26) is connected by a connection channel member (50, 52) with at least one cooling channel (42) in the bottom member (22).

7. The battery module (100) according to claim 6, wherein:
the plurality of side walls (24, 25, 26, 27) comprises two end plates (25, 27) opposite to each other and fixed to the bottom member (22) and/or the two opposite side walls (24, 26),
at least one end plate (25) of the two end plates (25, 27) are positioned indented with respect to an end (29) of the bottom member (22), and
the connection channel member (50) is formed between the at least one indented end plate (25) and the end (29) of the bottom member (22).

8. The battery module (100) according to claim 6, wherein:
the plurality of side walls (24, 25, 26, 27) comprises two end plates (25, 27) opposite to each other, wherein the end plates (25, 27) are bent and extended from the bottom member (22) or formed by deep drawing, and
the connection channel member (52) is formed inside the frame (20) at a corner (39) of the bottom member (22).

9. The battery module (100) according to any of the preceding claims 1 to 8, wherein the first metal sheet (32) has a thickness (t1) less than the thickness (t2) of the second metal sheet (34).

10. The battery module (100) according to any of the preceding claims 1 to 9, wherein the first metal sheet (32) and the second metal sheet (34) comprise different metals and/or different metal alloys.

11. The battery module (100) according to claim 10, wherein the first metal sheet (32) comprises aluminum or an aluminum alloy and the second metal sheet (34) comprises a steel or a metal matrix composite.

12. The battery module (100) according to any of the preceding claims 10 to 11, wherein the first metal sheet (32) has a thermal conductivity higher than the thermal conductivity of the second metal sheet (34).

13. A method of manufacturing a battery module (100), wherein the method comprises the steps of:
a) providing (S100) a plate (30) by roll-bonding a first metal sheet (32) with a second metal sheet (34);
b) bending (S200) the plate (30) so that at least two side walls (24, 26) opposite from each other are bent and extended from a bottom member (22);
c) inflating (S300) of the plate (30) such that at least one cooling channel (40) is formed between bonding areas (33) where the first metal sheet (32) and the second metal sheet (34) are roll-bonded; and
d) providing (S400) a plurality of battery cells (10) in an accommodation space (28) formed at least by the bottom member (22) and the at least two side walls (24, 26).

14. The method according to claim 13, wherein the step of inflating (S300) is performed before or after the step of bending (S200) the plate (30).

15. A battery system/pack comprising the battery module (100) according to any one of the preceding claims 1 to 12.
